# EUROPÄISCHE PATENTSCHRIFT

(11) **EP 2 320 225 B1**
(45) Veröffentlichungstag und Bekanntmachung des Hinweises auf die Patenterteilung: **21.11.2018**
(21) Anmeldenummer: 10161407.1
(22) Anmeldetag: 29.04.2010
(51) Int. Cl.: G01S 15/93, G01S 7/52, G01S 15/00, G01S 15/87, G01N 29/22

(54) **Verfahren zum Abgleich von Ultraschallsensoren**
Method for adjusting ultrasound sensors
Procédé d'égalisation de capteur à ultrasons

(30) Priorität: 26.06.2009 DE 102009027221
(43) Veröffentlichungstag der Anmeldung: 11.05.2011
(73) Patentinhaber: Robert Bosch GmbH, 70442 Stuttgart (DE)
(72) Erfinder: Kirchner, Tobias, 71636, Ludwigsburg (DE); Schroff, Clemens, 76703, Kraichtal (DE)

(56) Entgegenhaltungen:
- US-A- 5 991 234

## Beschreibung

### Stand der Technik

Die Erfindung betrifft ein Verfahren zum Abgleich von mindestens zwei Ultraschallsensoren, die so zueinander positioniert sind, dass die von einem Ultraschallsensor gesendeten Signale auch von mindestens einem weiteren Ultraschallsensor empfangen werden können. Weiterhin betrifft die Erfindung eine Vorrichtung zur Messung des Abstandes zu einem Gegenstand, umfassend mindestens zwei Ultraschallsensoren gemäß dem Oberbegriff des Anspruchs 6 und eine Verwendung der Vorrichtung.

Bei Ultraschallsensoren, wie sie aus dem Stand der Technik bekannt sind, wird mittels elektrischer Impulse eine Piezo-Membran in Schwingung versetzt. Diese Schwingung dient der Schallabstrahlung. Im Anschluss an die Schallabstrahlung muss die Membran möglichst schnell zum Stillstand gebracht werden, damit der an einem Objekt reflektierte Schall auf die stehende Membran auftrifft und diese erneut in Schwingungen versetzten kann. Auf diese Weise kann der Ultraschallsensor gleichzeitig als Sender und als Empfänger verwendet werden. Um den Einsatz als Sender und Empfänger zu ermöglichen, ist es erforderlich, dass das Abklingen der ursprünglichen Schwingung schnell erfolgt. Hierzu ist es zum Beispiel möglich, die Rückseite der Membran mit einem Schaum zu befüllen, der die Membran dämpft, so dass diese schneller zum Stillstand kommt. Nachteil ist jedoch, dass der Schaum schwierig handhabbar ist und hohe Ausfallquoten verursacht und die Membran immer bedämpft wird, d. h. auch beim Empfangen von Signalen. Zudem muss die Dämpfung durch den Schaum mit einem sehr großen Ansteuersignal von ungefähr 40V kompensiert werden, wodurch die Bauteile erheblich verteuert werden.

Ein weiteres Problem ist die Tatsache, dass die Ultraschallsensoren selbst temperaturabhängige elektrische Eigenschaften aufweist. Als Folge davon ändert sich auch die Frequenz, bei der der Sensor am effektivsten arbeitet, die so genannte Resonanzfrequenz. Zudem unterliegt die Resonanzfrequenz diversen Streuungen der Herstellungsparameter. Um dies auszugleichen wird derzeit jeder einzelne Sensor in der Fertigung abgeglichen beziehungsweise selektiert. Jedoch ist auch dieser Abgleich nicht in der Lage, die Temperaturabhängigkeit auszugleichen. Zur Verbesserung des Ultraschallsensors ist es derzeit bekannt, diesen aktiv zu bedämpfen, geregelt zu schwingen oder mehrere Konfigurationen, die optional eingesetzt werden können, im Ultraschallsensor abzuspeichern.

Aus der US 5 991 234 A ist ein Verfahren bekannt, um die aktuelle Resonanzfrequenz eines Ultraschallsensors zu bestimmen, wobei der Ultraschallsensor zur Abstandsmessung in einem Fahrzeug eingesetzt wird. Dazu wird der Sensor mit Frequenzen eines bestimmten Frequenzbereichs betrieben wobei aus dem jeweiligen Abklingverhalten der Schwingung wird die aktuelle Resonanzfrequenz ermittelt wird. Die so ermittelte Resonanzfrequenz kann für die folgenden Abstandsmessungen als Sendefrequenz verwendet werden.

Bei Verwendung der Ultraschallsensoren zum Beispiel in einer Einparkhilfe für Kraftfahrzeuge, ist es erwünscht, dass mehrere Sensoren jeweils die gesendeten Impulse eines der Sensoren empfangen können. Hierzu ist es notwendig, dass alle verwendeten Sensoren mit ähnlicher Frequenz arbeiten. Hierzu werden die Sensoren derzeit einem Selektionsprozess unterzogen, bei dem es jedoch noch zu erhöhten Ausfallraten kommen kann.

Ein Verfahren zur Kalibrierung eines Ultraschallsensors ist zum Beispiel in US 2005/188743 beschrieben. Das Verfahren wird jedoch nur für einen Ultraschallsensor eingesetzt. Wie mehrere Ultraschallsensoren aufeinander abgestimmt werden können, geht aus der Beschreibung nicht hervor.

### Offenbarung der Erfindung

### Vorteile der Erfindung

Ein erfindungsgemäßes Verfahren zum Abgleich von mindestens zwei Ultraschallsensoren, die so zueinander positioniert sind, dass die von einem Ultraschallsensor gesendeten Signale auch von mindestens einem weiteren Ultraschallsensor empfangen werden können, umfasst folgende Schritte.
(a) Messen der Resonanzfrequenz aller eingesetzten Ultraschallsensoren,
(b) Verwenden einer Sendefrequenz für jeden der Ultraschallsensoren, die der Resonanzfrequenz des sendenden Ultraschallsensors und mindestens einem dem sendenden Ultraschallsensor benachbarten Ultraschallsensor ähnlich ist.

Durch die Verwendung einer Sendefrequenz für jeden der Ultraschallsensoren, die der Resonanzfrequenz des sendenden Ultraschallsensors und mindestens einem der dem sendenden Ultraschallsensor benachbarten Ultraschallsensoren ähnlich ist, kann die entsprechende Frequenz, von den jeweiligen Sensoren detektiert werden. Aus dem zeitlichen Offset, mit dem das Signal von mehreren Sensoren empfangen wird, lässt sich so zum Beispiel auf Entfernung und Richtung eines Gegenstands zu dem sendenden und empfangenen Sensor schließen. Insbesondere bevorzugt ist es, wenn nicht nur einer der benachbarten Ultraschallsensoren das Signal des sendenden Ultraschallsensors mit empfängt, sondern mehr als einer, insbesondere alle der eingesetzten Ultraschallsensoren.

Um eine geeignete Sendefrequenz zu ermitteln, ist es zum Beispiel möglich, dass die einzelnen Sensoren jeweils mit einem Mikrocontroller ausgestattet sind und mit Hilfe der Mikrocontroller der Ultraschallsensoren die Frequenz aus den für die einzelnen Sensoren gemessenen Resonanzfrequenzen berechnet wird. Auch ist eine Kommunikation zwischen den Sensoren durch den Einsatz des Mikrocontrollers möglich. Neben der Ausgestaltung des Sensors mit einem Mikrocontroller ist es alternativ auch möglich, dass der Mikrocontroller Bestandteil eines ASICs ist.

Neben einer gemeinsamen Ermittlung einer geeigneten Sendefrequenz ist es auch möglich, dass jeder Sensor für sich die Resonanzfrequenz ermittelt und dann mit den anderen Sensoren kommuniziert. Jeder Sensor kennt dann die Frequenzen der anderen und kann selbst die gemeinsame Resonanzfrequenz ermitteln. Ebenso kann der Sensor feststellen, wenn er selbst so weit außerhalb der Toleranz liegt, dass er nicht verwendet werden kann.

In einer Ausführungsform der Erfindung wird ein gemeinsames Steuergerät eingesetzt, mit dem die einzelnen Ultraschallsensoren verbunden sind. Zur Ermittlung der Sendefrequenz wird in diesem Fall die Resonanzfrequenz der jeweiligen mit dem Steuergerät verbundenen Ultraschallsensoren an das Steuergerät übermittelt und aus den einzelnen Resonanzfrequenzen der jeweiligen Ultraschallsensoren die Sendefrequenz ermittelt. Die so ermittelte Sendefrequenz wird dann vom Steuergerät an die einzelnen Ultraschallsensoren übermittelt.

Durch die Bestimmung der Sendefrequenz aus den Resonanzfrequenzen der eingesetzten Ultraschallsensoren ist es möglich, die Ultraschallsensoren auch nach ihrer Montage aneinander anzugleichen. Ein Abgleich braucht nicht mehr in der Fertigung erfolgen. Zudem ist es möglich, die Frequenz auch im laufenden Betrieb zu ändern, indem das erfindungsgemäße Verfahren durchgeführt wird. Hierdurch ist es zum einen möglich, die Temperaturabhängigkeit der einzelnen Ultraschallsensoren auszugleichen, zum anderen können auch Alterungseffekte kompensiert werden.

Vorteil des erfindungsgemäßen Verfahrens ist es, dass durch den Angleich der Frequenzen im laufenden Betrieb kein Ausschuss auf Grund abweichender Frequenzen erfolgt. Zudem ist durch das erfindungsgemäße Verfahren die eingesetzte Vorrichtung unempfindlich gegenüber Umwelteinflüssen, das heißt Temperatur und Alterung, da diese Einflüsse durch das erfindungsgemäße Verfahren ausgeglichen werden können.

Insbesondere zum Ausgleich von Temperaturabhängigkeiten und sonstigen Alterungserscheinungen ist es bevorzugt, das erfindungsgemäße Verfahren in vorgegeben Intervallen durchzuführen. Hierzu werden jeweils die Schritte (a) und (b) wiederholt. Die vorgegebenen Intervalle können entweder an Hand der Betriebsdauer der Ultraschallsensoren vorgegeben werden oder es werden variable Intervalle gewählt, wobei das Verfahren jeweils dann ausgeführt wird, wenn die Empfangsleistung einzelner Sensoren nachlässt.

Bei einer erfindungsgemäßen Vorrichtung zur Messung des Abstands zu einem Gegenstand, die mindestens zwei Ultraschallsensoren umfasst, wobei die Ultraschallsensoren als Sender und als Empfänger eingesetzt werden können und derart angeordnet sind, dass zumindest zu einem sendenden Ultraschallsensor benachbarte Ultraschallsensoren die gesendeten Impulse empfangen können, umfasst jeder der Ultraschallsensoren einen internen Mikrocontroller.

Den Mikrocontroller dient dazu, die Frequenz der Ansteuerung durch eine vorhergehende Messung durch den Mikrocontroller zu bestimmen. Dies ermöglicht es, den Sensor auch mit einer anderen Frequenz anzuregen, die zum Beispiel möglichst nahe an den Resonanzfrequenzen der anderen beteiligten Ultraschallsensoren liegt. Dies hat den Vorteil, dass der Abgleich auf eine Frequenz nicht mehr bei der Herstellung der Sensoren erfolgen muss, sondern im laufenden Betrieb erfolgen kann. Auf diese Weise ist es möglich, dass eine Gruppe von Sensoren die für sie günstigste Frequenz wählen kann. Wenn die Sensoren werkseitig vorsortiert werden, ist es möglich, auch Sensoren zu verwenden, die zum Beispiel außerhalb des üblichen Toleranzbandes liegen. So kann zum Beispiel eine Gruppe Sensoren eingesetzt werden, die gemeinsam entweder oberhalb oder unterhalb der vorgegebenen Toleranz liegen.

Ein Ultraschallsensor, der für das Verfahren und die Vorrichtung eingesetzt werden kann, umfasst zum Beispiel einen Mikrocontroller, einen Treiber, eine Sensormembran und einen Signalverstärker. Der Controller kann zum Beispiel als 8-Bit-Controller ausgeführt sein. Neben der Ausführungsform, in der der Ultraschallsensor einen internen Mikrocontroller umfasst, ist es auch möglich, dass der Mikrocontroller Bestandteil eines ASICs ist.

Mit dem Treiber werden die Steuersignale des Controllers in ein wesentlich stärkeres Signal umgewandelt. Durch das Anlegen einer Spannung wird in der als Piezoelement ausgeführten Sensormembran eine Bewegung erzeugt. Umgekehrt erzeugt auch jede Bewegung wieder eine Spannung, so dass der Sensor sowohl als Sender als auch als Empfänger verwendet werden kann. Mit Hilfe des Signalverstärkers wird das Messsignal für den Controller aufgearbeitet. Neben dem analogen Signal, das von der Sensormembran empfangen wurde, liefert der Signalverstärker auch ein Triggersignal. Das analoge Signal kann vom Controller ausgewertet werden, um Informationen über die Frequenz der Schwingung zu erhalten. Das Triggersignal ist ein von einem einfachen Komparator erzeugtes Signal, welches nur die Null-Durchgänge der Schwingung detektiert. Dadurch ist es möglich, die Frequenz noch genauer als mittels Abtastung durch einen Analog-Digital Umsetzer zu ermitteln.

Durch das Triggersignal kann auch die Phasenlage der Schwingung sehr genau ermittelt werden, so dass eine Messung mit einem AD-Wandler zu einem genau bestimmbaren Zeitpunkt gestartet werden kann. So kann trotz der Verwendung eines einfachen, relativ langsamen AD-Wandlers eine Spitzenwerterfassung des analogen Signalverlaufs realisiert werden. Das Auftreten des Maximums kann mit Hilfe der Frequenz und der Phasenlage vorhergesagt werden.

Um die Resonanzfrequenz des Ultraschallsensors zu bestimmen wird die Sensormembran durch den Treiber kurz angeregt. Die Frequenzanregung muss dabei jedoch nicht genau der Sensorfrequenz entsprechen. Nach der Anregung wird der Treiber abgeschaltet und in den hochohmigen Zustand versetzt. Die Sensormembran schwingt selbstständig auf ihrer Resonanzfrequenz nach. Die Dauer der Schwingung kann sehr genau gemessen werden. Aus der Dauer wird die Resonanzfrequenz berechnet.

Bei einer Messung wird der Sensor mit der Resonanzfrequenz angeregt. In dieser Phase wird Ultraschall ausgesendet. Im Anschluss an das Senden muss die Membran schnell wieder zum Stillstand gebracht werden, um den reflektierten Schall messen zu können. Hierzu wird der Treiber hochohmig geschaltet, damit der Sensor frei schwingen kann. Sobald der Controller den Nulldurchgang des Stroms erkennt, beginnt dieser den Sensor gegenphasig anzusteuern. Nach einigen Perioden muss die Ansteuerung erneut mit dem Schwingkreis synchronisiert werden. Hierzu wird der Treiber wieder hochohmig geschaltet und eine selbständige Schwingung abgewartet. Danach wird erneut gegenphasig angesteuert, eventuell mit vermindertem Tastgrad oder geringerer Ansteuerspannung, um den Schwingkreis nicht zu stark zu bremsen und damit eventuell wieder anzuregen. Auf diese Weise wird ein verbleibendes Sensorsignal erhalten, das klein genug ist, dass der reflektierte Schall detektiert werden kann.

Alternativ ist es auch möglich, beim gegenphasigen Ansteuern prinzipiell einen kleineren Tastgrad zu wählen, so dass der Sensor am Ende einer Ansteuerung kurz frei schwingen kann. Hierdurch lässt sich die Ansteuerung bei jeder Periode synchronisieren.

### Kurze Beschreibung der Zeichnungen

Ausführungsbeispiele der Erfindung sind in den Figuren dargestellt und werden in der nachfolgenden Beschreibung näher erläutert.

Es zeigen:
Figur 1 einen schematischen Aufbau einer erfindungsgemäßen Vorrichtung,
Figur 2 einen schematischen Aufbau eines geeignetes Ultraschallsensors.

### Ausführungsformen der Erfindung

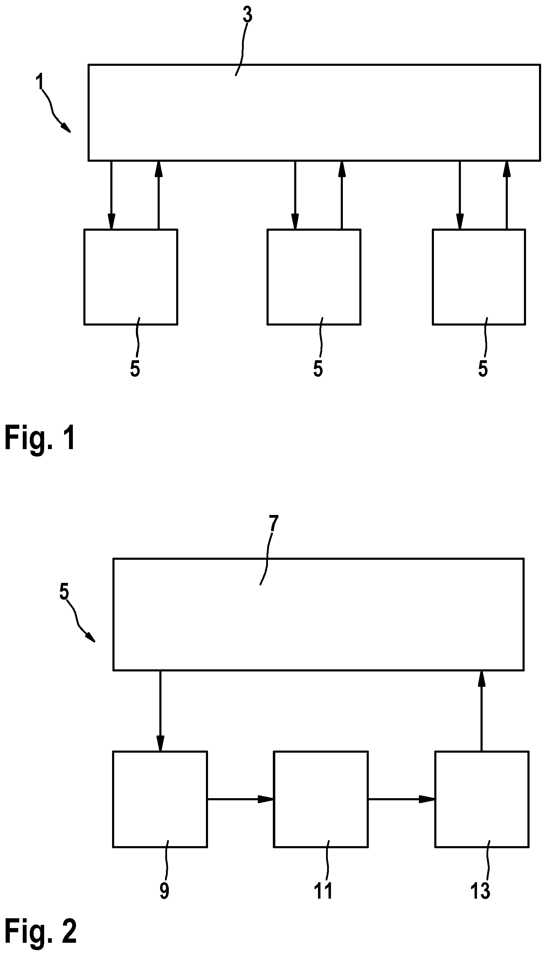

In Figur 1 ist schematisch ein Aufbau einer geeigneten Vorrichtung zur Messung des Abstandes zu einem Gegenstand dargestellt.

Eine Vorrichtung 1 zur Messung des Abstandes zu einem Gegenstand umfasst ein Steuergerät 3 und mindestens zwei Ultraschallsensoren 5. In der hier dargestellten Ausführungsform umfasst die Vorrichtung 1 drei Ultraschallsensoren. Es können jedoch auch mehr als drei Ultraschallsensoren 5 von der Vorrichtung umfasst sein. Die Ultraschallsensoren 5 sind jeweils mit dem Steuergerät 3 verbunden, wobei jeweils sowohl Signale vom Steuergerät 3 an die Ultraschallsensoren 5 gesendet werden können, als auch von den Ultraschallsensoren 5 gesendete Signale vom Steuergerät 3 empfangen werden können.

Um die mit dem Steuergerät 3 verbundenen Ultraschallsensoren 5 untereinander abzugleichen wird zunächst die Resonanzfrequenz der Ultraschallsensoren 5 gemessen. Die jeweiligen Resonanzfrequenzen der einzelnen Ultraschallsensoren 5 werden dann an das Steuergerät 3 übermittelt. Aus den von den einzelnen Ultraschallsensoren 5 übermittelten Resonanzfrequenzen ermittelt das Steuergerät 3 die Frequenz, die den Resonanzfrequenzen der einzelnen Ultraschallsensoren 5 am nächsten kommt. Dabei kann das arithmetische Mittel der Resonanzfrequenzen der beteiligten Sensoren als Sendefrequenz verwendet werden. Es ist auch möglich, Sensoren, die eine besonders große Abweichung in ihrer Resonanzfrequenz aufweisen, zum Beispiel durch einen Defekt, aus der Gruppe auszuschließen. Die verbleibenden Sensoren würden dann eine noch ähnlichere gemeinsame Sende- und Empfangsfrequenz verwenden, was zu einer besseren Empfindlichkeit führt.

Die den Resonanzfrequenzen der einzelnen Ultraschallsensoren 5 am nächsten kommende Frequenz wird dann an den Ultraschallsensor 5 übermittelt, der diese als Sendefrequenz verwendet.

Je nach Resonanzfrequenz der einzelnen Ultraschallsensoren kann die Sendefrequenz für jeden der Ultraschallsensoren 5 von der Sendefrequenz der anderen Ultraschallsensoren 5 abweichen. Daher ist es bevorzugt, die jeweilige als Sendefrequenz geeignete Frequenz für jeden der Ultraschallsensoren 5 separat zu ermitteln und nicht eine gemeinsame Sendefrequenz für alle Ultraschallsensoren 5 einzusetzen. Je nach Resonanzfrequenz der einzelnen Ultraschallsensoren 5 ist es jedoch auch möglich, dass alle Ultraschallsensoren 5 die gleiche Sendefrequenz verwenden.

Neben der hier dargestellten Ausführungsform, bei der die Ultraschallsensoren 5 jeweils mit dem Steuergerät 3 verbunden sind, ist es auch möglich, die Ultraschallsensoren 5 untereinander zu verbinden und auf den Einsatz eines Steuergerätes zu verzichten. In diesem Fall muss die als Sendefrequenz verwendete Frequenz von den Ultraschallsensoren 5 eigenständig ermittelt werden. Dies kann zum Beispiel über die Verschaltung oder mit Hilfe der in den Ultraschallsensoren 5 enthaltenen Mikrocontroller erfolgen.

Verwendet wird die erfindungsgemäße Vorrichtung vorzugsweise für Einparkhilfen für Kraftfahrzeuge. Für derartige Einparkhilfen ist es erforderlich, sowohl die Entfernung zu einem Hindernis als auch die Richtung des Hindernisses festzustellen. Durch die Schalllaufzeiten, das heißt der Offset zwischen dem Senden des Signals und dem Empfang des Signals kann auf die Entfernung des Gegenstandes von einem Sensor geschlossen werden. Aus dem Zeit-Offset des Empfangs unterschiedlicher Sensoren kann die Richtung bestimmt werden. Damit sich die Signale der einzelnen Sensoren nicht überschneiden ist es vorteilhaft, wenn die Sensoren nacheinander ein Signal aussenden, wobei der nächste Sensor sein Signal erst dann aussendet, wenn das Signal des vorhergehenden Sensors empfangen worden ist. Alternativ kann eine Unterscheidung auch dadurch erfolgen, dass die Sensoren jeweils mit leicht unterschiedlichen Frequenzen senden, so dass durch die Frequenz des empfangenden Signals erkannt wird, von welchem der Sensoren das Signal gesendet worden ist.

Wenn Gegenstände aus unterschiedlichen Richtungen erkannt werden sollen, zum Beispiel am Frontbereich und am Heckbereich eines Kraftfahrzeuges, ist es möglich, die eingesetzten Ultraschallsensoren 5 in Gruppen einzuteilen. Eine Einteilung erfolgt dabei vorzugsweise nach Sensoren die im Heckbereich und Sensoren, die im Frontbereich eingesetzt werden. Im Allgemeinen arbeiten die Sensoren, die im Frontbereich des Kraftfahrzeuges angeordnet sind, nicht mit den Sensoren, die im Heckbereich des Fahrzeuges angeordnet sind, zusammen, so dass diese sich nicht gegenseitig hören können. Alternativ ist es auch möglich, stark voneinander abweichende Sensoren jeweils zu den Gruppen zusammenzufassen, so dass sich die jeweiligen Sendefrequenzen der einzelnen Gruppen so stark voneinander unterscheiden, so dass diese die Messwerte der Sensoren der anderen Gruppen nicht beeinflussen.

Damit die Sensoren einer Gruppe jeweils die Signale der anderen Ultraschallsensoren der Gruppe empfangen können, ist es jedoch erforderlich, dass innerhalb einer Gruppe nur Sensoren eines Typs, das heißt mit einer ähnlichen Resonanzfrequenz verwendet werden. Eine Einteilung könnte zum Beispiel in Sensoren mit einer positiven beziehungsweise einer negativen Abweichung von der durchschnittlichen Resonanzfrequenz erfolgen.

Neben der hier dargestellten Ausführungsform ist es bei Einsatz eines Mikrocontrollers entweder als integraler Bestandteil der Ultraschallsensoren 5 oder als Bestandteil eines ASICs möglich, auf das Steuergerät zu verzichten. In diesem Fall übernimmt der Mikrocontroller die Aufgaben des Steuergerätes. So kann zum Beispiel jeder Ultraschallsensor 5 seine Resonanzfrequenz bestimmen und diese an die übrigen Ultraschallsensoren 5 senden. Die Mikrocontroller der einzelnen Ultraschallsensoren 5 bestimmen dann aus den empfangenen Resonanzfrequenzen die geeignete Sendefrequenz. Alternativ ist es auch möglich, dass nur einer der Mikrocontroller die Sendefrequenz ermittelt und diese dann an die übrigen Ultraschallsensoren sendet.

Der schematische Aufbau eines Ultraschallsensors, wie er in der in Figur 1 dargestellten Vorrichtung eingesetzt wird, ist in Figur 2 dargestellt.

Ein Ultraschallsensor 5 umfasst einen internen Mikrocontroller 7, der zum Beispiel als 8-Bit-Controller ausgeführt ist. Der Controller 7 ist mit einem Treiber 9 verbunden. Mit dem Treiber 9 wird ein Steuersignal des Controllers 7 in ein stärkeres Signal umgewandelt. Als Treiber eignet sich zum Beispiel eine Push-Pull- Transistorstufe. Die Spannung dieser Transistorstufe kann mit Hilfe eines Übertragers auf ein geeignetes Niveau transformiert werden.

Das vom Treiber 9 verstärkte Signal wird an eine Sensormembran 11 übertragen. Die Sensormembran 11 ist als Piezoelement ausgeführt, so dass das Anlegen einer Spannung eine Bewegung der Membran erzeugt. Somit wird durch das Anlegen der Spannung ein Signal von der Sensormembran ausgesandt. Im anderen Fall wird ein auf den Ultraschallsensor 5 auftreffendes Signal von der Sensormembran 11 empfangen, in dem diese in Schwingungen versetzt wird. Die Schwingungen erzeugen dann wiederum eine Spannung. Diese Spannung wird an einem Signalverstärker 13 übertragen, der das Signal für den Controller 7 aufbereitet und an den Controller 7 übermittelt. Neben dem analogen Messsignal der Sensormembran 11 wird vom Signalverstärker 13 auch ein Triggersignal an den Controller 7 übertragen.

Das Triggersignal ist ein von einem Komparator erzeugtes Signal, das dem Controller den Nulldurchgang der Schwingung anzeigt. Dieses Signal kann direkt von einem Interrupt-Eingang verarbeitet werden, was erhebliche Vorteile gegenüber der Abtastung mit Hilfe eines AD-Wandlers bringt.

Durch den Mikrocontroller 7 ist es möglich, zunächst die Sensormembran 11 in Schwingungen zu versetzten. Gleichzeitig kann durch ein geeignetes Signal vom Mirkocontroller die Sensormembran 11 mit Hilfe des Treibers 9 gegenphasig angesteuert werden, um die Schwingungen der Sensormembran 11 zu dämpfen. Dies ermöglicht ein schnelles Ausschwingen der Sensormembran, so dass diese bereits nach sehr kurzer Zeit wieder als Empfänger zur Verfügung stehen kann.

Um die einzelnen Ultraschallsensoren 5 der Vorrichtung 1 untereinander abgleichen zu können, ist es notwendig, die Resonanzfrequenz eines jeden der Ultraschallsensoren 5 zu bestimmen. Hierzu wird zunächst die Sensormembran 11 durch den Treiber 9 angeregt, wobei die Frequenz der Anregung nicht der Resonanzfrequenz entsprechen muss. Nach der Anregung wird der Treiber abgeschaltet und in den hochohmigen Zustand versetzt. Die Sensormembran 11 schwingt selbstständig auf ihrer Resonanzfrequenz nach. Die Dauer der Schwingung kann sehr genau gemessen werden Dazu wird das Triggersignal durch den Mikrocontroller ausgewertet. Als Referenz dient die Taktbasis des Controllers, die zumeist aus einem Quarzoszillator besteht. Aus der Dauer der Schwingung wird dann die Resonanzfrequenz berechnet.

## Patentansprüche

1. Verfahren zum Abgleich von mindestens zwei Ultraschallsensoren (5) einer Vorrichtung (1) zur Messung eines Abstands zu einem Gegenstand, wobei die Ultraschallsensoren (5) so zueinander positioniert sind, dass die von einem Ultraschallsensor (5) gesendeten Signale auch von mindestens einem weiteren Ultraschallsensor (5) empfangen werden können, umfassend folgende Schritte:
(a) Messen der Resonanzfrequenz aller eingesetzten Ultraschallsensoren (5),
(b) Verwenden einer Sendefrequenz für jeden der Ultraschallsensoren (5), die dem arithmetischen Mittel der Resonanzfrequenzen der beteiligten Ultraschallsensoren (5) entspricht.

2. Verfahren gemäß Anspruch 1 **dadurch gekennzeichnet, dass** zur Ermittlung der Sendefrequenz ein gemeinsames Steuergerät (3) verwendet wird, das mit den Ultraschallsensoren (5) verbunden ist.

3. Verfahren gemäß Anspruch 2, **dadurch gekennzeichnet, dass** die Sendefrequenz vom Steuergerät (3) an die einzelnen Ultraschallsensoren (5) übermittelt wird.

4. Verfahren gemäß Anspruch 1, **dadurch gekennzeichnet, dass** jeder Ultraschallsensor (5) für sich die Resonanzfrequenz ermittelt und dann mit den übrigen Ultraschallsensoren (5) kommuniziert.

5. Verfahren gemäß einem der Ansprüche 1 bis 4, **dadurch gekennzeichnet, dass** die Schritte (a) und (b) in vorgegebenen Intervallen zum erneuten Abgleich der Ultraschallsensoren (5) wiederholt werden.

6. Vorrichtung (1) zur Messung des Abstands zu einem Gegenstand, umfassend mindestens zwei Ultraschallsensoren (5), wobei die Ultraschallsensoren (5) als Sender und als Empfänger eingesetzt werden können und derart angeordnet sind, dass zumindest zu einem sendenden Ultraschallsensor (5) benachbarte Ultraschallsensoren (5) die gesendeten Impulse empfangen können, **dadurch gekennzeichnet, dass** zum Frequenzabgleich jeder der Ultraschallsensoren (5) einen internen Mikrocontroller (7) umfasst oder ein Mikrocontroller als Bestandteil eines ASICs eingesetzt wird,wobei der Mikrocontroller (7) derart ausgebildet ist, folgende Schritte auszuführen:
a.) Messen der Resonanzfrequenz aller eingesetzten Ultraschallsensoren (5),
b.) Verwenden einer Sendefrequenz für jeden der Ultraschallsensoren (5), die dem arithmetischen Mittel der Resonanzfrequenzen der beteiligten Ultraschallsensoren (5) entspricht.

7. Vorrichtung gemäß Anspruch 6, **dadurch gekennzeichnet, dass** weiterhin ein Steuergerät (3) umfasst ist, um die geeignete Sendefrequenz zu ermitteln und an die Ultraschallsensoren (5) zu übermitteln.

8. Vorrichtung gemäß Anspruch 6 oder 7, **dadurch gekennzeichnet, dass** die Vorrichtung eine Gruppe von mehr als zwei Ultraschallsensoren (5) umfasst, wobei jeder Ultraschallsensor (5) der Gruppe die von einem anderen der Ultraschallsensoren (5) gesendeten Signale empfangen und verarbeiten kann.

9. Verwendung der Vorrichtung gemäß einem der Ansprüche 6 bis 8 als Einparkhilfe für ein Kraftfahrzeug.

## Claims

1. Method for adjusting at least two ultrasonic sensors (5) of an apparatus (1) for measuring a distance to an object, wherein the ultrasonic sensors (5) are positioned with respect to one another in such a manner that the signals transmitted by one ultrasonic sensor (5) can also be received by at least one further ultrasonic sensor (5), comprising the following steps of:
(a) measuring the resonant frequency of all ultrasonic sensors (5) used,
(b) using a transmission frequency for each of the ultrasonic sensors (5), which transmission frequency corresponds to the arithmetic mean of the resonant frequencies of the ultrasonic sensors (5) involved.

2. Method according to Claim 1, **characterized in that** a common control device (3) which is connected to the ultrasonic sensors (5) is used to determine the transmission frequency.

3. Method according to Claim 2, **characterized in that** the transmission frequency is transmitted from the control device (3) to the individual ultrasonic sensors (5).

4. Method according to Claim 1, **characterized in that** each ultrasonic sensor (5) itself determines the resonant frequency and then communicates with the other ultrasonic sensors (5).

5. Method according to one of Claims 1 to 4, **characterized in that** steps (a) and (b) are repeated at predefined intervals in order to adjust the ultrasonic sensors (5) again.

6. Apparatus (1) for measuring the distance to an object, comprising at least two ultrasonic sensors (5), wherein the ultrasonic sensors (5) can be used as transmitters and as receivers and are arranged in such a manner that at least ultrasonic sensors (5) adjacent to a transmitting ultrasonic sensor (5) can receive the transmitted pulses, **characterized in that**, for the frequency adjustment, each of the ultrasonic sensors (5) comprises an internal microcontroller (7) or a microcontroller is used as part of an ASIC, wherein the microcontroller (7) is designed to carry out the following steps:
a.) measuring the resonant frequency of all ultrasonic sensors (5) used,
b.) using a transmission frequency for each of the ultrasonic sensors (5), which transmission frequency corresponds to the arithmetic mean of the resonant frequencies of the ultrasonic sensors (5) involved.

7. Apparatus according to Claim 6, **characterized in that** a control device (3) is also included in order to determine the suitable transmission frequency and to transmit it to the ultrasonic sensors (5).

8. Apparatus according to Claim 6 or 7, **characterized in that** the apparatus comprises a group of more than two ultrasonic sensors (5), wherein each ultrasonic sensor (5) in the group can receive and process the signals transmitted by another of the ultrasonic sensors (5).

9. Use of the apparatus according to one of Claims 6 to 8 as a parking aid for a motor vehicle.

## Revendications

1. Procédé d'égalisation d'au moins deux capteurs à ultrasons (5) d'un dispositif (1) destiné à mesurer une distance d'un objet, dans lequel les capteurs à ultrasons (5) sont positionnés les uns par rapport aux autres de manière à ce que les signaux émis par un capteur à ultrasons (5) puissent également être reçus par au moins un autre capteur à ultrasons (5), comprenant les étapes suivantes :
(a) mesurer la fréquence de résonance de tous les capteurs à ultrasons utilisés (5),
(b) utiliser pour chacun des capteurs à ultrasons (5) une fréquence d'émission correspondant à la moyenne arithmétique des fréquences de résonance des capteurs à ultrasons (5) concernés.

2. Procédé selon la revendication 1, **caractérisé en ce qu'**un dispositif de commande commune (3) relié aux capteurs à ultrasons (5) est utilisé pour déterminer la fréquence d'émission.

3. Procédé selon la revendication 2, **caractérisé en ce que** la fréquence d'émission est transmise de l'unité de commande (3) aux différents capteurs à ultrasons (5).

4. Procédé selon la revendication 1, **caractérisé en ce que** chaque capteur à ultrasons (5) détermine sa propre fréquence de résonance puis communique avec les autres capteurs à ultrasons (5).

5. Procédé selon l'une des revendications 1 à 4, **caractérisé en ce que** les étapes (a) et (b) sont répétées à des intervalles prédéterminés pour égaliser à nouveau les capteurs à ultrasons (5).

6. Dispositif (1) de mesure de la distance d'un objet, comprenant au moins deux capteurs à ultrasons (5), dans lequel les capteurs à ultrasons (5) peuvent être utilisés en tant qu'émetteurs et que récepteurs et sont disposés de manière à ce que des capteurs à ultrasons (5) adjacents à au moins un capteur à ultrasons (5) émetteur puissent recevoir les impulsions émises, **caractérisé en ce que**, pour l'égalisation de fréquence, chacun des capteurs à ultrasons (5) comprend un microcontrôleur interne (7) ou **en ce qu'**un microcontrôleur est utilisé en tant que composant d'un ASIC, dans lequel le microcontrôleur (7) est conçu pour effectuer les étapes suivantes :
a.) mesurer la fréquence de résonance de tous les capteurs à ultrasons (5) utilisés,
b.) pour chacun des capteurs à ultrasons (5), utiliser une fréquence d'émission qui correspond à la moyenne arithmétique des fréquences de résonance des capteurs à ultrasons (5) concernés.

7. Dispositif selon la revendication 6, **caractérisé en ce qu'**il est en outre prévu un dispositif de commande (3) pour déterminer la fréquence d'émission appropriée et la transmettre aux capteurs à ultrasons (5) .

8. Dispositif selon la revendication 6 ou 7, **caractérisé en ce que** le dispositif comprend un groupe de plus de deux capteurs à ultrasons (5), dans lequel chaque capteur à ultrasons (5) du groupe peut recevoir et traiter les signaux émis par un autre des capteurs à ultrasons (5).

9. Utilisation du dispositif selon l'une des revendications 6 à 8 en tant qu'aide au stationnement d'un véhicule automobile.
